**Europäisches Patentamt**

**European Patent Office**

**Office européen des brevets**

(19)

(11) Numéro de publication : **0 296 002 B1**

(12)

# FASCICULE DE BREVET EUROPEEN

(45) Date de publication du fascicule du brevet :
**03.04.91 Bulletin 91/14**

(51) Int. Cl.$^5$ : **B29C 59/14, H05H 1/00**

(21) Numéro de dépôt : **88401329.3**

(22) Date de dépôt : **01.06.88**

(54) Procédé pour traiter la surface d'objets.

(30) Priorité : **03.06.87 FR 8707733**

(43) Date de publication de la demande :
**21.12.88 Bulletin 88/51**

(45) Mention de la délivrance du brevet :
**03.04.91 Bulletin 91/14**

(84) Etats contractants désignés :
**BE CH DE ES FR GB IT LI LU NL SE**

(56) Documents cités :
**EP-A- 0 120 307**
**EP-A- 0 131 433**
**FR-A- 2 395 663**
**GB-A- 2 148 794**
**US-A- 3 309 299**
**US-A- 4 501 717**
**US-A- 4 536 271**
**JOURNAL OF APPLIED POLYMER SCIENCE, vol. 26, 1981, pages 2087-2096, John Wiley & Sons, Inc., New York, US; M.R. WERTHEIMER et al.: "Surface property modification of aromatic polyamides by microwave plasmas"**

(56) Documents cités :
**PLASTICS ENGINEERING, vol. 41, no. 10, octobre 1985, pages 41-45, Brookfield Center, CT, US; P.W. ROSE et al.: "Treating plastic surfaces with cold gas plasmas"**
**PATENT ABSTRACTS OF JAPAN, vol. 8, no. 46 (C-212)[1483], 29 février 1984; & JP-A-58 204 171 (TOKYO SHIBAURA DENKI K.K.) 28-11-1983**

(73) Titulaire : **J. REYDEL S.A.**
**rue JB Marquant**
**F-59147 Gondecourt (FR)**

(72) Inventeur : **Dessaux, Odile**
**84 Rue des Stations**
**F-59800 Lille (FR)**
Inventeur : **Mutel, Brigitte**
**107/25 Rue Breughel**
**F-59650 Villeneuve d'Ascq (FR)**
Inventeur : **Szarzynski, Stephan**
**11 Résidence le Château**
**F-62360 Condette (FR)**

(74) Mandataire : **Bouju, André**
**Cabinet Bouju, 38, Avenue de la Grande Armée**
**F-75017 Paris (FR)**

## Description

La présente invention concerne un procédé pour traiter la surface d'objets afin de rendre celle-ci adhérente vis-à-vis d'un revêtement, correspondant au préambule de la revendication 1.

L'application d'un revêtement en polymère tel qu'une résine époxy sur la surface d'un objet en matière plastique telle que du polypropylène chargé ou non pose de nombreux problèmes techniques.

Actuellement, pour rendre adhérente vis-à-vis d'un revêtement la surface des objets en matière plastique, celle-ci est soumise à un traitement chimique, tel qu'une attaque au moyen d'acide chromique. Ce traitement chimique doit être suivi par un lavage. Ce traitement chimique présente l'inconvénient d'être long et est de ce fait peu adapté à une production industrielle en grande série.

Il a déjà été envisagé de traiter les objets au moyen de plasma.

Ainsi, on connaît un appareil permettant d'obtenir par décharge haute fréquence (13,6 MHz) dans de l'oxygène plus ou moins dopé, un plasma riche en électrons et en ions. Ce plasma peut être utilisé pour le traitement des surfaces. Toutefois, le réacteur dans lequel est formé ce plasma présente un rapport volume de plasma sur énergie électromagnétique faible. Cet appareil présente en outre l'inconvénient de fournir des rendements énergétiques de traitement médiocres.

On connaît selon l'EP-A-120307 un procédé pour traiter la surface d'objets dans lequel on place lesdits objets dans une enceinte dans laquelle on forme par décharge microonde un plasma gazeux et dans lequel pour former le plasma, on introduit un gaz dans un tube à décharge qui traverse un coupleur relié à un générateur d'onde centimétrique ou décimétrique, l'enceinte de traitement proprement dite étant reliée au tube à décharge et située en aval de celui-ci relativement au sens de la circulation du gaz, le volume de cette enceinte étant nettement plus grand que celui du tube à décharge de façon que le gaz puisse se détendre dans ladite enceinte.

Le gaz utilisé dans ce procédé est essentiellement de l'O2. La demanderesse a constaté que le plasma ainsi obtenu ne permettait pas de modifier suffisamment la surface des objets en vue d'obtenir une adhérence à l'égard d'un revêtement en polymère.

Le but de la présente invention est de remédier aux inconvénients des réalisations connues en créant un procédé de traitement de la surface d'objets qui permette de traiter celle-ci efficacement et avec un haut rendement énergétique, les durées de traitement étant nettement plus courtes que celles des traitements actuellement mis en oeuvre.

L'invention vise ainsi un procédé pour traiter la surface d'objets afin de rendre celle-ci adhérente vis-à-vis d'un revêtement, dans lequel on place lesdits objets dans une enceinte dans laquelle on forme par décharge microonde un plasma gazeux et dans lequel pour former le plasma, on introduit un gaz dans un tube à décharge qui traverse un coupleur relié à un générateur d'onde centimétrique ou décimétrique, l'enceinte de traitement proprement dite étant reliée au tube à décharge et située en aval de celui-ci relativement au sens de la circulation du gaz, le volume de cette enceinte étant nettement plus grand que celui du tube à décharge de façon que le gaz puisse se détendre dans ladite enceinte.

Suivant l'invention, ce procédé est caractérisé en ce que le gaz est de l'azote et en ce que le plasma détendu dans l'enceinte contient essentiellement des atomes et des molécules d'azote excitées et est sensiblement dépourvu d'ions et d'électrons libres.

Le plasma d'azote dit "froid" est ainsi obtenu en régime dynamique en dehors de la zone de décharge microonde.

Le plasma formé dans l'enceinte et de nature différente de celui obtenu directement dans la zone de décharge. Cette modification de la nature du plasma est visible par un changement de couleur.

Du fait de la cinétique particulière de la recombinaison des atomes d'azote, le volume du plasma est très fortement étendu (après détente du gaz de la zone de décharge vers l'enceinte de traitement).

On obtient ainsi un rapport volume de plasma sur énergie électromagnétique compatible avec une production industrielle.

De plus, les durées de traitement sont très courtes (quelques minutes), ce qui rend le procédé parfaitement adapté à une production en grande série.

La nature de la surface obtenue après traitement dans le plasma réalisé au moyen du procédé conforme à l'invention, n'a pas encore été déterminée. Néanmoins, les essais ont permis de constater que le procédé selon l'invention permettait d'obtenir une adhérence vis-à-vis d'un revêtement en polymère nettement améliorée par rapport aux traitements chimiques connus.

L'azote utilisé dans le procédé selon l'invention peut être sensiblement pur.

De préférence cependant, l'azote utilisé est dopé par une proportion inférieure ou égale 4% en moles de $CF_4$ et/ou de $NF_3$.

Les essais ont permis de constater qu'avec un tel dopage, non seulement l'adhérence d'un revêtement en polymère est améliorée, mais les temps de traitement sont encore raccourcis.

L'étude de la surface traitée ainsi obtenue a permis de mettre en évidence des liaisons C-F susceptibles de former des ponts d'hydrogène avec le revêtement et qui pourraient expliquer la forte adhérence obtenue.

D'autres particularités et avantages de l'invention apparaitront encore dans la description ci-après.

Aux dessins annexés donnés à titre d'exemples non limitatifs :

    – la figure 1 est une vue schématique de l'installation pour la mise en oeuvre du procédé selon l'invention,

    – la figure 2 est une vue schématique d'une enceinte de traitement ayant un plus grand volume que celle de l'installation représentée sur la figure 1.

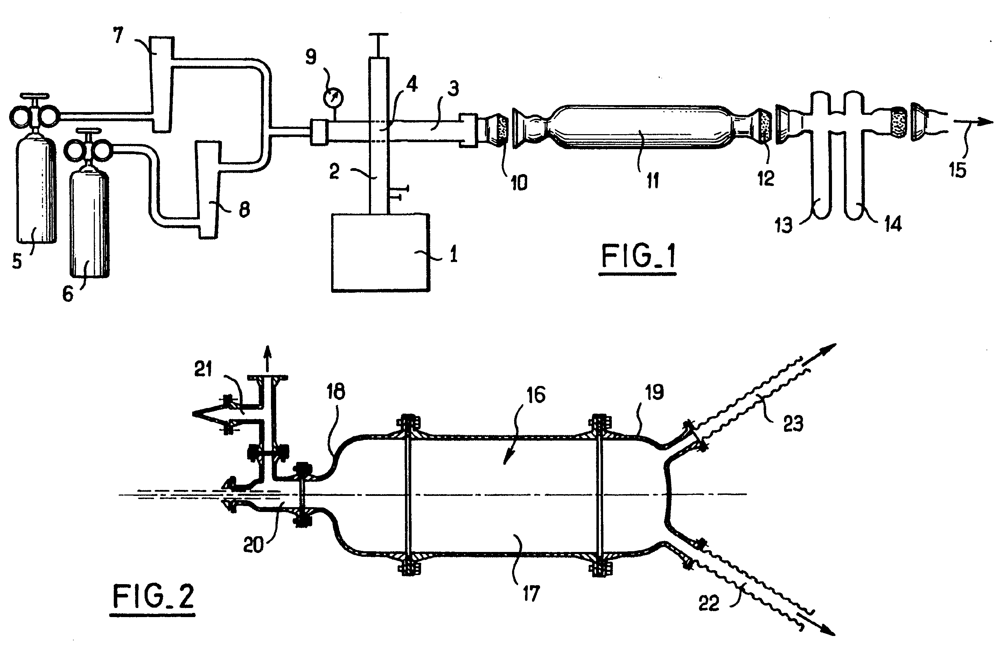

Dans la réalisation représentée sur la figure 1, l'installation selon l'invention comprend un générateur microonde 1 de fréquence égale à 2 450 MHz et de puissance réglable entre 0 et 1,5 KW. Ce générateur 1 est relié à un coupleur 2 (cavité résonnante) qui traverse un tube de quartz 3 de diamètre intérieur égal à 15 mm de façon à créer à l'intersection entre ce tube 3 et le coupleur 2 une zone de décharge 4.

Le coupleur 2 a été décrit en détail dans l'article de G. MOREAU, O. DESSAUX et P. GOUDMAND intitulé "Cavité microonde pour plasmas à pression atmosphérique" dans J. Phys. E. Sci. Instrum. Vol 16 1983 pages 1160-1161.

Le tube 3 est relié d'un côté à une bouteille 5 d'azote comprimé de qualité R (AIR LIQUIDE) contenant des traces d'oxygène et à une bouteille 6 contenant de l'azote ainsi que 5% de $CF_4$ ou de $NF_3$. Entre les bouteilles 5 et 6 et le tube 3 sont disposés des régulateurs de débit 7, 8 permettant de régler le débit du gaz entre 0 et 30 l/min.

Au tube 3 est également reliée une jauge de Pirani 9 permettant de mesurer la pression à l'intérieur de ce tube.

L'autre côté du tube 3 est relié par un raccord sphérique en verre 10 à un tube cylindrique 11 en verre Pyrex qui constitue l'enceinte de traitement destinée à contenir les objets à traiter.

Ce tube cylindrique 11 présente un volume égal à 2 litres. Ce volume est nettement plus grand que celui du tube à décharge 3 de façon que le gaz puisse se détendre dans l'enceinte de traitement.

Le tube cylindrique 11 est relié d'autre part par un raccord sphérique en verre 12 à un piège 13 renfermant une éponge de cuivre et un piège 14 à azote liquide reliés à une pompe vide 15 ayant un débit de 35 m3/h à la pression atmosphérique.

L'installation que l'on vient de décrire a été utilisée pour traiter des boîtiers en polypropylène chargé placés à l'intérieur du tube 11.

Lors de cette expérience, la pression régnant à l'intérieur de l'installation était égale à 20 torr (0,026 bar) et la puissance microonde transmise au plasma était égale à 80 watts.

Le plasma formé dans le tube 11 renfermait des atomes d'azote libres (environ 5%) à l'état fondamental $N(^4S)$, des molécules d'azote à l'état fondamental vibrationnellement excitées et des molécules d'azote électroniquement excitées dont la principale est $N_2$ $(^3\Sigma_u^+)$. Le plasma ne contenait pratiquement pas d'ions ni d'électrons libres.

Dans le cas où le plasma est obtenu avec de l'azote faiblement dopé par le l'oxygène, il a été déterminé que la durée optimale de traitement est de 3 mn.

Dans le cas où le plasma est obtenu avec de l'azote dopé par du $CF_4$ ou du $NF_3$ à une proportion molaire inférieure ou égale à 4%, la durée optimale de traitement est égale à 1 mn.

Après traitement, les boîtiers en polypropylène ont été revêtus de résine époxy. Les tests mécaniques et thermiques effectués ont révélé que l'adhérence de la résine époxy était excellente. De plus, celle-ci a un caractère réversible.

Il a été déterminé que le rendement énergétique du procédé selon l'invention était supérieur à 1/500, ce qui montre qu'il est parfaitement adapté à une production industrielle.

De plus, contrairement aux procédés chimiques actuellement utilisés, le procédé selon l'invention est de mise en oeuvre très rapide et n'est pas polluant.

Le procédé selon l'invention est applicable à toute sorte de matières plastiques et en particulier les suivantes : polypropylène, polyéthylène et polytéréphtalate d'éthylène. Ce procédé s'applique également au traitement d'objets en métal tel que l'aluminium, destinés à être recouverts par une couche en polymère ou en métal.

Pour rendre l'installation que l'on vient de décrire mieux adaptée à une production industrielle en grande série, il suffit d'augmenter le volume de l'enceinte 11 de traitement.

Ainsi, la figure 2 décrit une enceinte 16 ayant un volume égal à 200 l environ. Cette enceinte 16 comprend un tube central cylindrique 17 de diamètre égal à 300 mm qui est fixé de façon amovible à deux cloches 18, 19.

La cloche 18 porte une tubulure 20 destinée à être raccordée à un tube à décharge tel que le tube 2 représenté sur la figure 1. Cette tubulure 20 comporte une dérivation reliée à une jauge (non représentée) pour mesurer la pression à une tubulure 21 raccordée à une vanne (non représentée) pour rétablir la pression atmosphérique à l'intérieur de l'enceinte 16. L'autre cloche 19 est reliée à deux tubulures flexibles 22, 23 reliées à la pompe à vide.

Bien entendu, l'invention n'est pas limitée aux exemples que l'on vient de décrire et on peut apporter à ceux-ci de nombreuses modifications sans sortir du cadre de l'invention.

Ainsi, la pression régnant à l'intérieur de l'installation peut varier entre 1 et 100 torr (0,0013 à 0, 13 bar).

L'installation peut comporter un coupleur différent de celui décrit.

On peut également utiliser des microondes de fréquence différente de celle décrite et en particulier égale à 433 MHz et 915 MHz qui sont légales en France et dans d'autres pays.

Les objets pouvant être traités au moyen du plasma produit conformément à l'invention peuvent présenter n'importe quelle forme. Ainsi, l'invention peut s'appliquer au traitement d'objets creux. Il suffit que le plasma puisse pénétrer en leur intérieur par un petit trou. L'intérieur de tels objets ne pourrait évidemment pas être traité au moyen des procédés classiques.

L'enceinte de traitement des objets peut être un métal, à condition que la surface intérieure de celui-ci soit recouvert par un revêtement tel que du polytétrafluoréthylène non réactif vis-à-vis du plasma.

## Revendications

1. Procédé pour traiter la surface d'objets afin de rendre celle-ci adhérente vis-à-vis d'un revêtement, dans lequel on place lesdits objets dans une enceinte (11, 16) dans laquelle on forme par décharge microonde un plasma gazeux et dans lequel pour former le plasma, on introduit un gaz dans un tube à décharge (3) qui traverse un coupleur (4) relié à un générateur (1) d'onde centimétrique ou décimétrique, l'enceinte (11, 16) de traitement proprement dite étant reliée au tube à décharge (3) et située en aval de celui-ci relativement au sens de la circulation du gaz, le volume de cette enceinte (11, 16) étant nettement plus grand que celui du tube à décharge (3) de façon que le gaz puisse se détendre dans ladite enceinte, caractérisé en ce que le gaz est de l'azote et en ce que le plasma détendu dans l'enceinte contient essentiellement des atomes d'azote et des molécules d'azote excitées et est sensiblement dépourvu d'ions et d'électrons libres.

2. Procédé conforme à la revendication 1, caractérisé en ce que l'azote utilisé est sensiblement pur.

3. Procédé conforme à la revendication 1, caractérisé en ce que l'azote utilisé est dopé par une proportion inférieure ou égale à 4% en moles de $CF_4$ et/ou de $NF_3$.

4. Procédé conforme à l'une des revendications 1 à 3, caractérisé en ce que le plasma est formé sous une pression comprise entre 0,0013 et 0,13 bar.

## Ansprüche

1. Verfahren zur Behandlung der Oberfläche von Gegenständen, um auf lhnen eine Beschichtung haften zu lassen, bei dem die Gegenstände in einen Behälter (11, 16) eingebracht werden, in dem ein gasförmiges Plasma durch eine Mikrowellenentladung gebildet wird, und bei dem zur Bildung des Plasmas Gas in ein Entladungsrohr (3) eingeleitet wird, das einen mit einem Zentimeter- oder Dezimeterwellengenerator (1) verbundenen Koppler (4) kreuzt, wobei der genannte Behandlungsbehälter (11, 16) mit dem Entladungsrohr (3) verbunden und bezüglich der Gaszirkulation stromabwärts von ihm angeordnet ist und das Volumen des Behälters (11, 16) deutlich größer ist als das des Entladungsrohres (3), so daß sich das Gas in dem genannten Behälter (11, 16) entspannen kann, dadurch gekennzeichnet, daß das Gas Stickstoff ist und daß das in dem Behälter entspannte Plasma im wesentlichen Stickstoffatome und angeregte Stickstoffmoleküle enthält und im wesentlichen frei von freien Ionen und Elektronen ist.

2. Verfahren nach Anspruch 1, dadurch gekennzeichnet, daß im wesentlichen reiner Stickstoff verwendet wird.

3. Verfahren nach Anspruch 1, dadurch gekennzeichnet, daß der verwendete Stickstoff mit einem Anteil von weniger oder gleich 4 Mol% von $CF_4$ und-/oder $NF_3$ angereichert ist.

4. Verfahren nach einem der Ansprüche 1 bis 3, dadurch gekennzeichnet, daß das Plasma unter einem Druck zwischen 0,0013 und 0,13 bar gebildet ist.

## Claims

1. A process for treating the surface of objects in order to make them adhesive vis-a-vis a coating, in which process the said objects are placed in a chamber (11, 16) in which a gaseous plasma is formed by microwave discharge, and in which process, in order to form the plasma, a gas is introduced into a discharge tube (3) which extends through a coupler (4) connected to a centimetre or decimetre wave generator (1), the actual treatment chamber (11, 16) being connected to the discharge tube (3) and situated downstream thereof relatively to the direction of gas flow, the volume of said chamber (11, 16) being distinctly larger than that of the discharge tube (3) so that the gas can expand in said chamber, characterised in that the gas is nitrogen and in that the plasma expanded in the chamber essentially contains excited nitrogen molecules and nitrogen atoms and is substantially devoid of free electrons and ions.

2. A process according to claim 1, characterised in that the nitrogen used is substantially pure.

3. A process according to claim 1, characterised in that the nitrogen used is doped by a proportion less than or equal to 4 mol.% of $CF_4$ and/or $NF_5$.

4. A process according to any one of claims 1 to 3, characterised in that the plasma is formed at a pressure of between 0.0013 and 0.13 bar.

FIG_1

FIG_2